# EUROPEAN PATENT APPLICATION

(11) **EP 2 602 627 A1**
(43) Date of publication of application: **12.06.2013**
(21) Application number: 12187808.6
(22) Date of filing: 09.10.2012
(51) Int. Cl.: G01P 3/487, G01P 3/488, G01P 13/04

(54) **Speed sensor wheel with asymmetry for determining direction of rotation**

(30) Priority: 09.12.2011 US 201113315470
(71) Applicant: Hamilton Sundstrand Space Systems International, Inc., Windsor Locks, CT 06096 (US)
(72) Inventor: Martin, Christopher Curtis, Byron, IL 61010 (US); Gilbert, Mark E., Rockford, IL 61102 (US)
(74) Representative: Leckey, David Herbert

(57) **Abstract**

A speed sensor target (102A) includes a target body (201). The target body (201) defines a central cavity (203) disposed to receive a shaft of a motor. The target body (201) includes a cylindrical outer surface having a plurality of asymmetrically spaced grooves (202) arranged thereon, and is formed of a magnetic material. A single sensor is adapted to provide signals showing disturbances caused by the grooves. The frequency of the signals indicates the speed, the order of the irregularly arranged disturbances allows to determine the direction of rotation.

## Description

### BACKGROUND OF THE INVENTION

The present invention is directed to motors, and more particularly, to apparatuses for sensing the speed and direction of rotation of rotating members, such as motors.

Generally, sensor targets are attached to a rotating member such as a motor shaft to determine the speed of the target in relation to a speed sensor attached to a stable frame of reference. The combination of the sensor target and sensor can generally be referred to as speed or velocity sensors. Therefore, rotational speed of a motor is easily measurable using a single target. However, if a direction of rotation is also needed, another speed sensor combination must be used to determine the difference in time value measurements of speed as related to a physical position of a target along the circumference of a motor shaft, and therefore the direction of rotation. Alternatively, complicated encoders may be mounted on a motor shaft with optical sensors to adequately measure speed and direction of rotation. It follows then, that in applications where weight restrictions are necessary (e.g., in aerospace applications), dual sensor targeting systems and/or bulky encoders may be too cumbersome and/or increase overall design costs.

### BRIEF DESCRIPTION OF THE INVENTION

According to an exemplary embodiment of the present invention, a speed sensor target includes a target body, the target body defining a central cavity disposed to receive a shaft of a motor, the target body includes a cylindrical outer surface having a plurality of asymmetrically spaced grooves arranged thereon, and the target body is formed of a magnetic material.

According to another exemplary embodiment of the present invention, a motor system includes a motor, the motor having a shaft configured to rotate in response to rotation of the motor and a speed sensor target arranged on the shaft. The speed sensor target comprises a target body, the target body defining a central cavity disposed to receive the shaft, the target body includes a cylindrical outer surface having a plurality of asymmetrically spaced grooves arranged thereon, and the target body is formed of a magnetic material. The motor system further includes a speed sensor configured to detect an amplitude of a magnetic field of the magnetic material.

### BRIEF DESCRIPTION OF THE DRAWINGS

The subject matter which is regarded as the invention is particularly pointed out and distinctly claimed in the claims at the conclusion of the specification. The foregoing and other features, and advantages of the invention are apparent from the following detailed description taken in conjunction with the accompanying drawings in which:
FIG. 1 is a motor system with speed and direction detection, according to an exemplary embodiment of the present invention;
FIG. 2 is an isometric view of a speed sensor target, according to an exemplary embodiment of the present invention;
FIG. 3 is a side view of the speed sensor target of FIG. 2;
FIG. 4 is a frontal view of the speed sensor target of FIG. 2;
FIG. 5 is an isometric view of a speed sensor target, according to an exemplary embodiment of the present invention;
FIG. 6 is a side view of the speed sensor target of FIG. 5;
FIG. 7 is a frontal view of the speed sensor target of FIG. 5; and
FIG. 8 is an example waveform of periodic disturbances of a magnetic field generated by a speed sensor target, according to an exemplary embodiment of the present invention.

### DETAILED DESCRIPTION OF THE INVENTION

As described above, detection of both the speed and direction of rotation of a motor often necessitates the application of dual magnetic sensor targeting systems. Further, in systems where weight and simplicity are at issue (e.g., aerospace applications), the dual magnetic sensor targeting systems are too bulky and complex. However, exemplary embodiments of the present invention provide magnetic sensors which reduce the drawbacks of conventional speed and direction detection systems. The technical effects and benefits of the invention include reduced weight and increased simplicity of a speed and direction detection system for use with a motor.

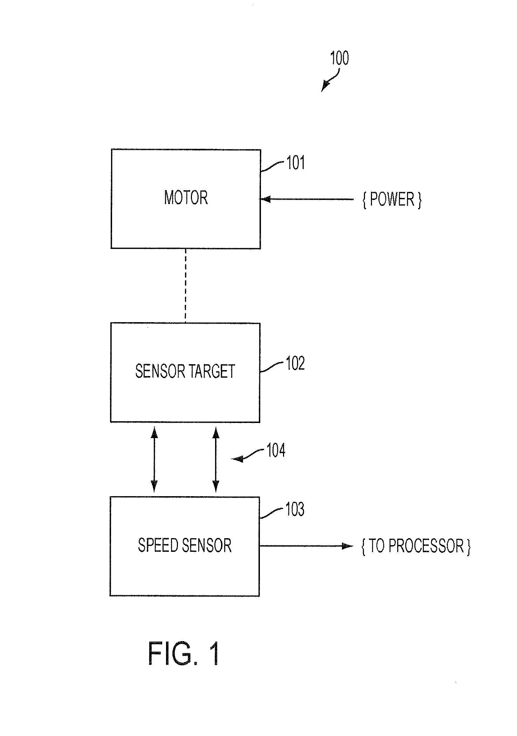

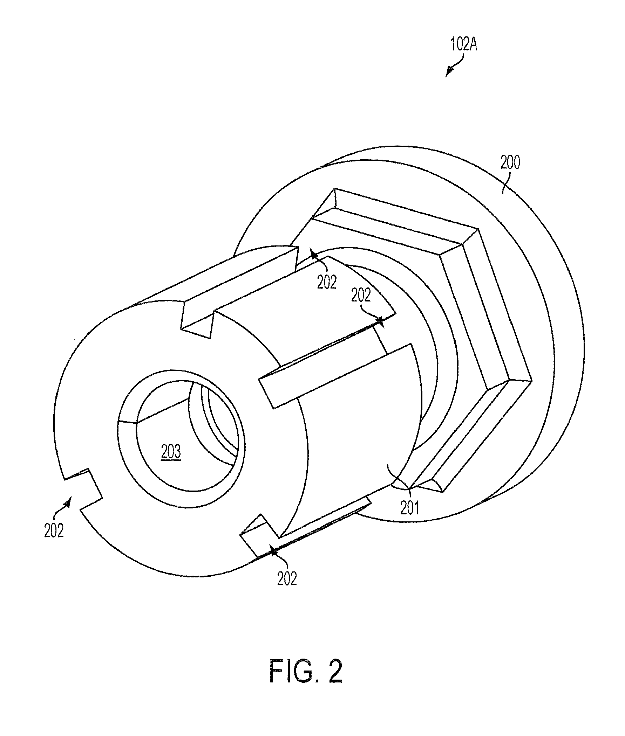

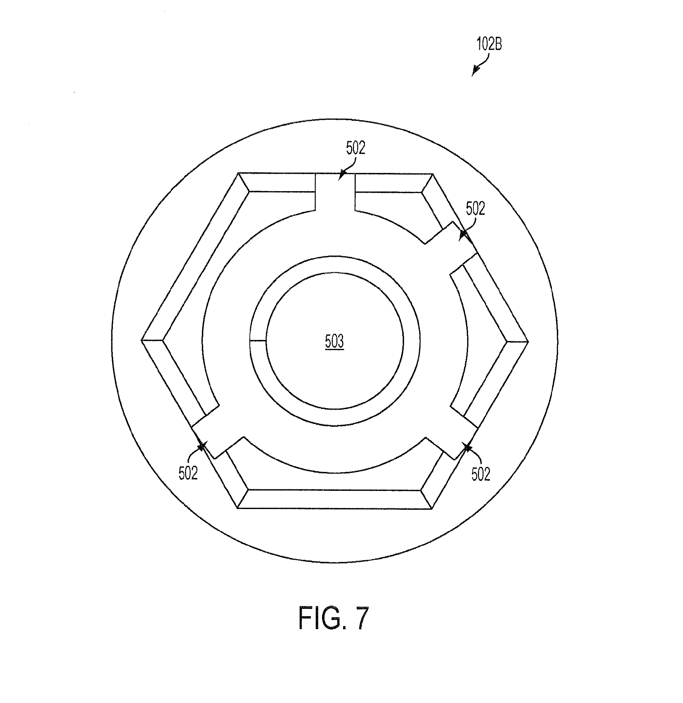

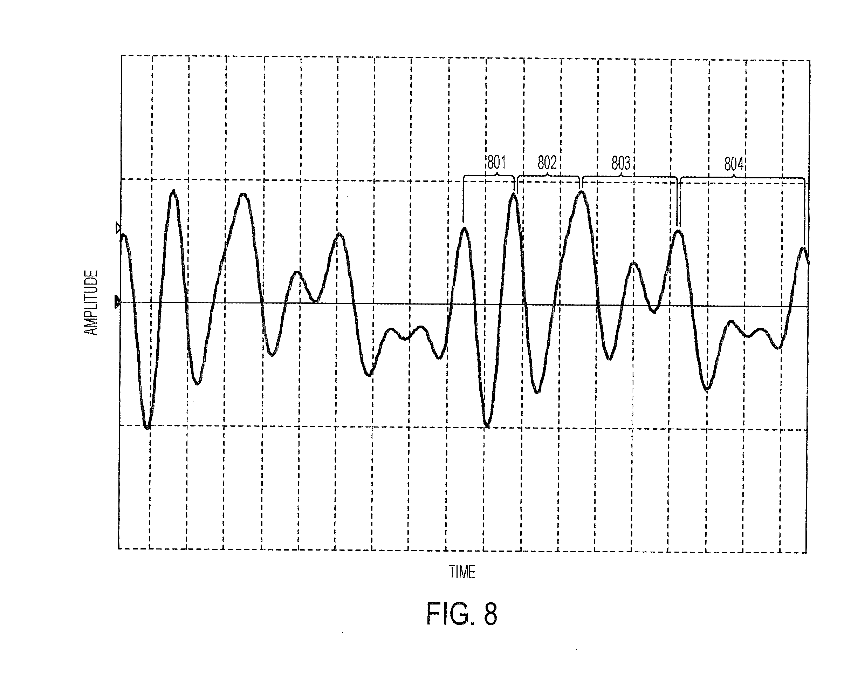

For example, FIG. 1 illustrates a motor system 100 that enables both speed and direction detection according to an exemplary embodiment of the present invention. The system 100 includes motor 101. The motor 101 may be any type of motor in which speed and direction of rotation are desired measurements. The system 100 further includes speed sensor target 102 in mechanical communication with the motor 101. The speed sensor target 102 may be arranged on an axis of rotation of the motor 101, for example, by being mounted on a motor output shaft or on a rotor of the motor 101. The speed sensor target 102 may distort a magnetic field 104 that, as detected by a speed sensor 103, is relatively easily interpreted to decipher both speed and directional data. For example, the speed sensor 103 may be a magnetic sensor configured to detect the amplitude of a magnetic field. Therefore, if a magnetic field is distorted such that peaks and valleys of differing amplitude and frequency (e.g., time of arrival) are produced, a processor of the speed sensor (or alternatively a processor external to the speed sensor) may measure the frequency and size of the peaks and valleys to determine the rotational frequency of the sensor target 102, and therefore the rotational frequency of the motor 101. Furthermore, if the circumferential surface features of the speed sensor target 102 are manufactured in an asymmetric manner (illustrated in FIGS. 2-7), an order of occurrence of the peaks and valleys may be used to discern the direction of rotation of the speed sensor target 102 (illustrated in FIG. 8). Thus, according to one exemplary embodiment, the total rotational velocity, with both speed and direction components, of the motor 101 may be measured.

FIG. 2 is an isometric view of a speed sensor target 102A, according to an exemplary embodiment of the present invention. As illustrated, the sensor target 102A includes a hollow central cavity 203 disposed to receive a cylindrical motor shaft, for example, for mounting on a motor. The central cavity 203 may be generally cylindrical with provisions to be mechanically tied to the shaft, and have a central axis which is collinear to an axis of rotation of a motor on which the sensor target 102A is mounted. As further illustrated, the sensor target 102A includes a main body 200 and a target body 201. The sensor target 102A may be entirely formed of a magnetic material or alternatively, at least the target body 201 may be formed of a magnetic material. The target body 201 includes a generally cylindrical outer surface having a plurality of asymmetrically spaced grooves 202 (e.g., surface features) distributed thereon. One or more of the grooves 202 may be a simple rectangular groove of relatively constant width, or may have a varying width or profile. Furthermore, the grooves 202 are arranged axially with regard to the central axis of the cavity 203, thereby permitting the distortion of a magnetic field produced by the target body 201 at irregular intervals (illustrated in FIG. 8) when the target 102A is rotated by a motor shaft.

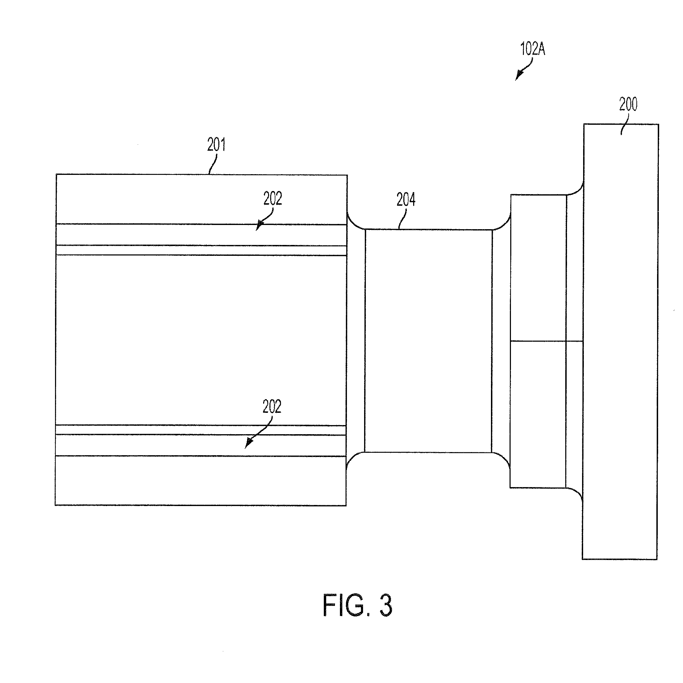

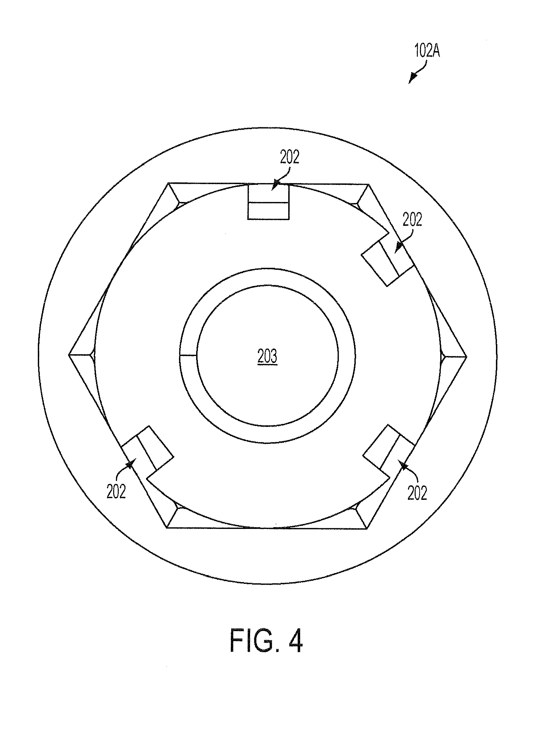

Turning to FIGS. 3 and 4, side and frontal views of the speed sensor target 102A are provided. As shown, the target body 201 may be arranged on a support member 204 which extends axially from main body 200. Therefore, the target body 201 may be arranged distally from a motor to ease mounting restrictions of an associated speed sensor disposed to detect the magnetic field of the target body 201. Alternatively, the support member 204 may be omitted, and the target body may be mounted to, or created directly from, the main body 200.

As described above, the speed sensor target 102A includes a target body 201 having a generally cylindrical outer surface with a plurality of grooves 202 asymmetrically formed or otherwise arranged around the outer surface. Alternatively, the speed sensor target 102A could be formed such that instead of grooves 202 it includes outwardly extending teeth to create a "toothed profile" allowing for a complementary form of magnetic field distortion.

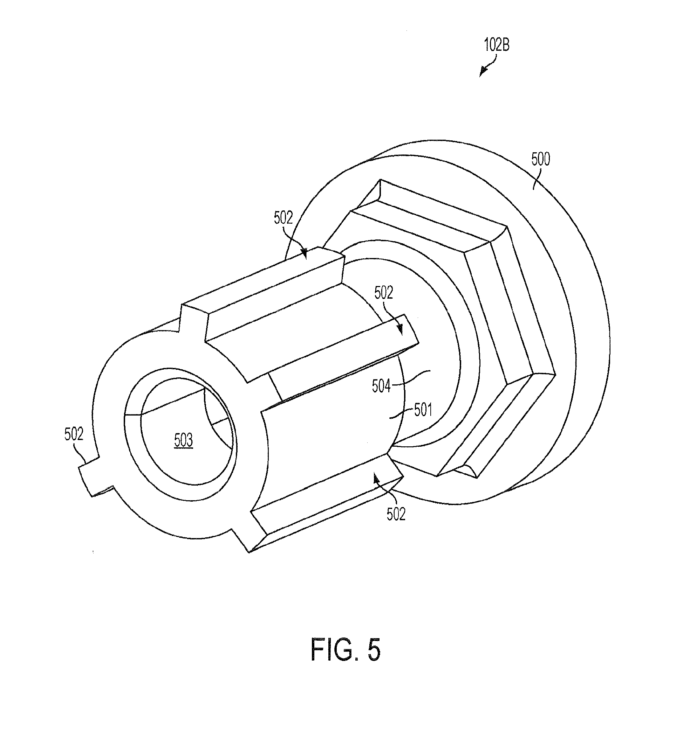

For example, FIG. 5 is an isometric view of an alternate speed sensor target 102B, according to an exemplary embodiment of the present invention. As illustrated, the sensor target 102B includes a hollow central cavity 503 disposed to receive a cylindrical motor shaft, for example, for mounting on a motor. The central cavity 503 may be generally cylindrical, and have a central axis which is collinear to an axis of rotation of a motor on which the sensor target 102B is mounted. As further illustrated, the sensor target 102B includes a main body 500 and a target body 501. The sensor target 102B may be entirely formed of a magnetic material or alternatively, at least the target body 501 may be formed of a magnetic material. The target body 501 includes a generally cylindrical outer surface having a plurality of teeth 502 asymmetrically distributed or otherwise formed thereon. One or more of the teeth 502 may be a simple rectangular protrusion of relatively constant width, or may have a varying width or profile. Furthermore, the teeth 502 are arranged axially with regard to the central axis of the cavity 503, thereby permitting the distortion of a magnetic field produced by the target body 501 at irregular intervals (illustrated in FIG. 8) when the target 102B is rotated by a motor shaft.

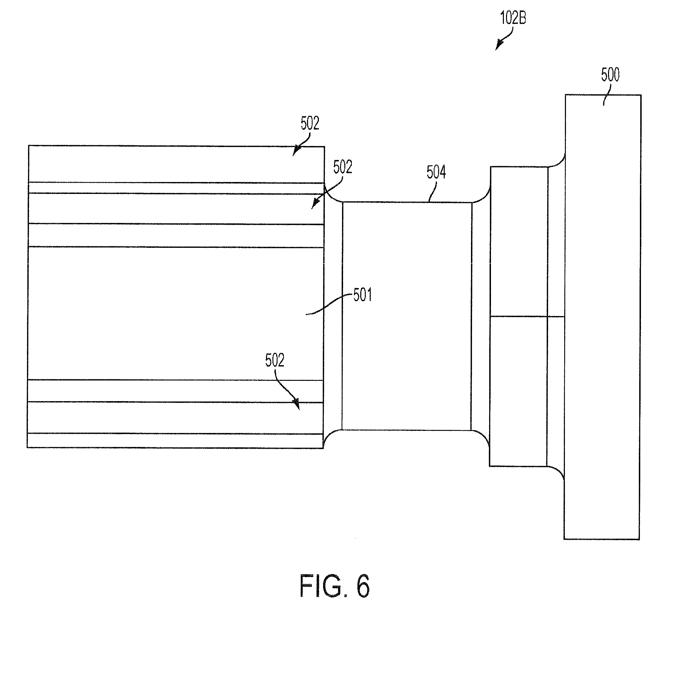

Turning to FIGS. 6-7, side and frontal views of the speed sensor target 102B are provided. As shown, the target body 501 may be arranged on a support member 504 which extends axially from main body 500. Therefore, the target body 501 may be arranged distally from a motor to ease mounting restrictions of an associated speed sensor disposed to detect the magnetic field of the target body 501. Alternatively, the support member 504 may be omitted, and the target body 501 may be mounted to, or created directly from, the main body 500.

It should be noted that according to experimentation performed utilizing the features of speed sensor targets 102A and 102B, it has been determined that the generally cylindrical outer surface 204 of target 102A provides a generally constant magnetic field thereby providing easy determination of the presence of a speed target. Further, the plurality of asymmetrically spaced grooves 202 periodically distort this magnetic field by producing dips or recessions in field strength. Accordingly, both the presence of a magnetic sensor target and speed/direction are more easily discernible using the features of target 102A. Conversely, the target 102B causes periodic increases in magnetic field only during target rotation as the plurality of teeth pass the proximity of a sensor. Therefore, there is no constant magnetic field allowing for easy and automation determination of the presence of a target body. Furthermore, the periodic increases in magnetic field may result in distorted measurements due to the movement of teeth as compared to the movement of a smooth cylindrical surface with grooves. Therefore, the features of target 102A may have increased benefit as compared to those features of target 102B.

Turning now to FIG. 8, an example waveform of periodic disturbances of a magnetic field generated by a speed sensor target in accordance with the teachings of exemplary embodiments is provided. As illustrated, the displacements 801, 802, 803, and 804 between adjacent amplitude peaks are asymmetrical, thereby allowing for the measure of a direction of rotation or a target body through interpretation of the order in which the displacements 801, 802, 803, and 804, are encountered. It should be readily understood that the order of occurrence of 801, 802, 803, and 804 increases in frequency as a target body increases in rotational speed. Thus, the actual rotational speed of the target is also easily discernible. Therefore, both the speed and direction of rotation of a speed sensor target, and thus an associated motor, are measurable using a single speed sensor target and speed sensor according to exemplary embodiments of the present invention.

While the invention has been described in detail in connection with only a limited number of embodiments, it should be readily understood that the invention is not limited to such disclosed embodiments. Rather, the invention can be modified to incorporate any number of variations, alterations, substitutions or equivalent arrangements not heretofore described, but which are commensurate with the scope of the invention. Additionally, while various embodiments of the invention have been described, it is to be understood that aspects of the invention may include only some of the described embodiments. Accordingly, the invention is not to be seen as limited by the foregoing description, but is only limited by the scope of the appended claims.

## Claims

1. A speed sensor target (102A;102B), comprising:
a target body (201;501), the target body (201;501) defining a central cavity (203;503) disposed to receive a shaft of a rotating member, wherein the target body (201;501) includes a cylindrical outer surface having a plurality of asymmetrically spaced grooves (202) arranged thereon, and wherein the target body (201;501) is formed of a magnetic material.

2. The speed sensor target of claim 1, wherein the plurality of asymmetrically grooves (202) are configured to periodically distort a magnetic field produced by the magnetic material in response to rotation of the target body (201;501).

3. The speed sensor target of claim 2, wherein each groove (202) of the plurality of asymmetrically spaced grooves is an axial groove formed in the outer cylindrical surface (204;504).

4. The speed sensor target of claim 3, wherein each axial groove (202) of the plurality of asymmetrically spaced axial grooves is rectangular.

5. The speed sensor target of any preceding claim, further comprising a support member (204;504) in mechanical communication with the target body (201;501).

6. The speed sensor target of claim 5, further comprising a main body (200;500) in mechanical communication with the support member (204;504).

7. The speed sensor target of claim 6, wherein the support member (204;504) and the main body (200;500) are formed of the magnetic material.

8. The speed sensor target of claim 7, wherein the central cavity (203;503) extends through the support member (204;504) and the main body (200;500).

9. A motor system (100), comprising:
a motor (101), the motor (101) having a shaft configured to rotate in response to rotation of the motor (101);
the speed sensor target (102A;102B) of any preceding claim arranged on the shaft; and
a speed sensor (103) configured to detect an amplitude of a magnetic field of the magnetic material.
